# EUROPÄISCHE PATENTANMELDUNG

(11) **EP 3 892 492 A1**
(43) Veröffentlichungstag der Anmeldung: **13.10.2021**
(21) Anmeldenummer: 21166637.5
(22) Anmeldetag: 01.04.2021
(51) Int. Cl.: B60L 5/00, G06K 9/00

(54) **KOPPELVERFAHREN ZUM KOPPELN EINES FAHRZEUGS MIT EINER OBERLEITUNG, COMPUTERPROGRAMMPRODUKT SOWIE FAHRZEUG**

(30) Priorität: 08.04.2020 DE 102020204566
(71) Anmelder: VOLKSWAGEN AG, 38440 Wolfsburg (DE)
(72) Erfinder: Lemke, Andreas, 39365 Ummendorf (DE)

(57) **Zusammenfassung**

Die Erfindung betrifft ein Koppelverfahren (100) zum Koppeln eines Fahrzeugs (1) mit einer Oberleitung (20) zur Stromversorgung des Fahrzeuges (1) während sich das Fahrzeug (1) entlang einer Fahrstrecke (200) in einer Fahrtrichtung (201) bewegt, umfassend die folgenden Schritte: Erfassen (101) eines ersten Hinweisgebers (10) zum Hinweis auf einen entlang der Fahrtrichtung (201) nach dem ersten Hinweisgeber (10) angeordneten Ankoppelbereich (21) der Oberleitung (20) für einen Beginn der Stromversorgung durch die Oberleitung (20), Bestimmen (102) einer ersten Fahrdistanz (10.1) des Fahrzeugs (1) zum Ankoppelbereich (21) in Abhängigkeit von dem ersten Hinweisgeber (10). Ferner betrifft die Erfindung ein Computerprogrammprodukt (300) sowie ein Fahrzeug (1).

## Beschreibung

Die Erfindung betrifft ein Koppelverfahren, ein Computerprogrammprodukt sowie ein Fahrzeug.

Es ist aus dem Stand der Technik bekannt, Straßenfahrzeuge mit einer Oberleitung zu koppeln, um den Fahrzeugen elektrische Energie zumindest über eine bestimmte Teilstrecke zur Verfügung zu stellen und somit deren Reichweite zu erhöhen. Dabei kann z. B. durch die Oberleitung eine Batterie des Fahrzeuges geladen werden und/oder ein Elektromotor zum Antrieb des Fahrzeuges betrieben werden. Dabei ist es ferner bekannt, dass ein Stromabnehmer mit möglichst konstantem Anpressdruck mit der Oberleitung gekoppelt wird, um einen elektrischen Kontakt herzustellen. Auf einer Fahrstrecke, die keine Oberleitung aufweist, wird der Stromabnehmer normalerweise eingefahren. Bspw. aus der DE 10 2014 219 466 A1 ist es bekannt, während der Fahrt unterhalb der Oberleitung Aufhängungspunkte der Oberleitung optisch zu detektieren, um den Anpressdruck des Stromabnehmers entsprechend anzupassen.

Problematisch ist jedoch, dass häufig ein Beginn der Oberleitung durch den Stromabnehmer nicht optimal erfasst werden kann, sodass zu Beginn der Oberleitungsstrecke einige Meter ungenutzt bleiben, bevor der Stromabnehmer die Oberleitung kontaktiert. Würde der Stromabnehmer hingegen bereits vor dem Kontakt mit der Oberleitung auf seine Betriebshöhe verstellt, könnte am Beginn der Oberleitung eine Kollision drohen. Bekannte Verfahren, um den Startpunkt der Oberleitung zu identifizieren umfassen z. B. eine Analyse von Geodaten, die von Satelliten zur Verfügung gestellt werden. Dabei ist es wünschenswert, eine Erkennung eines optimalen Ankoppelpunktes durch das Fahrzeug selbst zu ermöglichen.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung einen Koppelvorgang eines Fahrzeuges mit einer Oberleitung, vorzugsweise fahrzeugseitig, zu verbessern.

Die voranstehende Aufgabe wird gelöst durch ein Koppelverfahren mit den Merkmalen des Anspruchs 1, ein Computerprogrammprodukt mit den Merkmalen des Anspruchs 9 sowie ein Fahrzeug mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Koppelverfahren beschrieben sind, selbstverständlich auch im Zusammenhang mit dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Koppelverfahren zum Koppeln eines Fahrzeugs mit einer Oberleitung zur Stromversorgung des Fahrzeuges während sich das Fahrzeug entlang einer Fahrstrecke in einer Fahrtrichtung bewegt vorgesehen. Das Koppelverfahren umfasst die folgenden Schritte:
- Erfassen eines ersten Hinweisgebers zum Hinweis auf einen entlang der Fahrtrichtung nach dem ersten Hinweisgeber angeordneten Ankoppelbereich der Oberleitung für einen Beginn der Stromversorgung durch die Oberleitung,
- Bestimmen einer ersten Fahrdistanz des Fahrzeugs zum Ankoppelbereich in Abhängigkeit von dem ersten Hinweisgeber,
- Ermitteln eines Ankoppelbeginns eines Ankoppelvorgangs, bei welchem ein Koppelelement des Fahrzeugs in Abhängigkeit von der ersten Fahrdistanz des Fahrzeuges von einer Ruheposition in eine Betriebsposition zur Stromversorgung des Fahrzeuges über die Oberleitung bewegt wird,
- Durchführen des Ankoppelvorgangs in Abhängigkeit von dem ermittelten Ankoppelbeginn.

Bei dem Fahrzeug handelt es sich vorzugsweise um einen Lastkraftwagen. Die Oberleitung kann insbesondere mehrere stromführende Leiter aufweisen, durch welche die Stromversorgung des Fahrzeuges ermöglicht werden kann. Insbesondere wird nach dem Durchführen des Ankoppelvorgangs das Fahrzeug mit Strom über die Oberleitung versorgt. In der Betriebsposition kann durch das Koppelelement des Fahrzeuges ein Druck auf die Oberleitung ausübbar sein, um einen sicheren elektrischen Kontakt zu gewährleisten. Bei der Fahrstrecke kann es sich vorzugsweise um einen, insbesondere schienenlosen, Straßenabschnitt handeln, der beispielsweise frei wählbar durch das Fahrzeug befahrbar ist.

Unter dem ersten Hinweisgeber kann vorzugsweise ein Verkehrszeichen, insbesondere ein Verkehrsschild, verstanden werden. Dazu kann der erste Hinweisgeber an einem Rand der Fahrstrecke angeordnet sein. Insbesondere kann durch die Oberleitung ein elektrifizierter Fahrabschnitt der Fahrstrecke gebildet sein. Der erste Hinweisgeber ist vorzugsweise noch vor dem elektrifizierten Fahrabschnitt an der Fahrstrecke angeordnet.

Unter dem Ankoppelbereich der Oberleitung kann insbesondere ein Bereich verstanden werden, an dem das Koppelelement erstmalig mit der Oberleitung in elektrischen Kontakt bringbar ist. Bspw. kann der Ankoppelbereich unmittelbar nach einer ersten Stütze der Oberleitung vorgesehen sein. Das Erfassen des ersten Hinweisgebers findet insbesondere fahrzeugseitig statt. Dabei kann der Hinweis des ersten Hinweisgebers mittelbar oder unmittelbar auf den Ankoppelbereich gerichtet sein. Beispielsweise kann der Hinweis eine feste Distanz des ersten Hinweisgebers zur ersten Stütze oder Aufhängung der Oberleitung umfassen, so dass mittelbar auf den darauffolgenden Ankoppelbereich geschlossen werden kann. Dazu kann in einer Steuereinheit des Fahrzeuges z. B. eine Abmessung der Stütze oder Aufhängung abgespeichert sein. Es ist jedoch ebenfalls denkbar, dass der Hinweis unmittelbar auf den Ankoppelbereich gerichtet ist.

Beim Bestimmen der ersten Fahrdistanz des Fahrzeuges zum Ankoppelbereich kann insbesondere der Hinweis des ersten Hinweisgebers auf den Ankoppelbereich durch das Fahrzeug interpretiert werden. Bspw. kann vorgesehen sein, dass der erste Hinweisgeber codiert ist, um die erste Fahrdistanz zur Verfügung zu stellen.

Das Ermitteln des Ankoppelbeginns kann insbesondere ein Berechnen des Ankoppelbeginns in Abhängigkeit von der ersten Fahrdistanz umfassen. Dabei kann beim Ermitteln des Ankoppelbeginns bspw. eine Geschwindigkeit der Bewegung des Koppelelementes von der Ruheposition in die Betriebsposition berücksichtigt werden. Der Ankoppelbeginn kann bspw. einen Zeitpunkt nach dem Erfassen des ersten Hinweisgebers umfassen. Die Ruheposition kann insbesondere am Fahrzeug vorgesehen sein. Bspw. ist es denkbar, dass das Koppelelement in der Ruheposition in einer Aufnahme des Fahrzeuges für das Koppelelement aufgenommen ist. Dadurch kann z. B. bei der Fahrt des Fahrzeuges über einen oberleitungslosen Streckenabschnitt verhindert werden, dass sich das Koppelelement negativ auf eine Aerodynamik des Fahrzeuges auswirkt.

Das Durchführen des Ankoppelvorgangs kann insbesondere nach dem Ermitteln des Ankoppelbeginns erfolgen. Somit kann beim Ermitteln des Ankoppelbeginns bspw. ermittelt werden, zu welchem Zeitpunkt das Koppelelement aus der Ruheposition, z. B. am Fahrzeug, verstellt und der Ankoppelvorgang damit gestartet wird.

Somit kann der Beginn der Oberleitung über den ersten Hinweisgeber vorteilhaft durch das Fahrzeug bestimmt werden, sodass der Ankoppelvorgang auf den Beginn der Oberleitung ausgerichtet werden kann. Dadurch kann z. B. eine fahrzeuginterne Sicherheitstoleranz, nach welcher das Koppelelement die Oberleitung berührt, reduziert sein. Insbesondere kann somit eine möglichst lange elektrifizierte Fahrstrecke durch die Oberleitung ermöglicht sein, wenn diese vollständig oder beinahe vollständig durch das Fahrzeug ausgenutzt werden kann.

Weiterhin ist es bei einem erfindungsgemäßen Koppelverfahren denkbar, dass das Erfassen des ersten Hinweisgebers optisch durch eine Hinweissensorik des Fahrzeuges zum Erfassen des ersten Hinweisgebers erfolgt und/oder dass es sich bei dem ersten Hinweisgeber um ein passives Verkehrszeichen handelt. Die Hinweissensorik kann z. B. eine Kamera oder einen optischen Sensor umfassen. Vorteilhafterweise kann ein Kamerablickwinkel der Kamera in Richtung der Fahrzeugfront oder seitlich des Fahrzeuges ausgerichtet sein. Unter einem passiven Verkehrszeichen kann insbesondere ein Verkehrsschild verstanden werden, über welches Informationen zum Hinweis auf den Ankoppelbereich erfasst werden können. Bspw. kann der erste Hinweisgeber, insbesondere mit einer Distanz des ersten Hinweisgebers zum Ankoppelbereich, beschriftet sein. Ferner ist es denkbar, dass der erste Hinweisgeber ein Symbol aufweist, welches einer Distanz des ersten Hinweisgebers zum Ankoppelbereich zugeordnet ist. Dadurch kann in einfacher Art und Weise eine fahrzeugseitige Bestimmung der Fahrdistanz erfolgen, die insbesondere unabhängig von fahrzeugunabhängigen elektrischen Systemen ist. Darüber hinaus stellt ein passives Verkehrszeichen ein einfaches, zuverlässiges und kostengünstiges Mittel dar, um dem Fahrzeug eine Distanz zum Ankoppelbereich mitzuteilen. Insbesondere ist der erste Hinweisgeber in der Distanz zum Ankoppelbereich fest installiert. Die Hinweissensorik kann somit eine Verkehrszeichenerkennung aufweisen.

Weiterhin ist es bei einem erfindungsgemäßen Koppelverfahren denkbar, dass das Bestimmen der ersten Fahrdistanz und das Ermitteln des Ankoppelbeginns durch eine Auswerteeinheit des Fahrzeugs durchgeführt wird, durch welche einer Koppelsteuerung zum Durchführen des Ankoppelvorgangs der Ankoppelbeginn übermittelt wird. Die Auswerteeinheit kann bspw. Teil eines zentralen Steuergerätes des Fahrzeuges sein. Dadurch kann eine Rechenleistung im Fahrzeug zentralisiert sein. Ferner kann das Koppelverfahren somit nachrüstbar sein. Die Auswerteeinheit umfasst vorzugsweise einen Prozessor, durch welchen der Ankoppelbeginn in Abhängigkeit von der ersten Fahrdistanz berechnet werden kann. Somit kann das Bestimmen der ersten Fahrdistanz und das Ermitteln des Ankoppelbeginns fahrzeugseitig durchgeführt werden, insbesondere ohne auf externe Rechenleistungen zurückzugreifen. Dadurch kann ein autarker Betrieb des Fahrzeuges gewährleistet werden.

Weiterhin kann bei einem erfindungsgemäßen Koppelverfahren vorteilhafterweise vorgesehen sein, dass nach dem Erfassen des ersten Hinweisgebers zumindest ein zweiter Hinweisgeber zum Hinweis auf den Ankoppelbereich erfasst wird, anhand dessen eine zweite Fahrdistanz des Fahrzeuges zum Ankoppelbereich bestimmt wird, wobei der folgende Schritt durchgeführt wird:
- Aktualisieren des Ankoppelbeginn in Abhängigkeit von der zweiten Fahrdistanz.

Durch den zweiten Hinweisgeber kann insbesondere eine weitere Distanz des zweiten Hinweisgebers zum Ankoppelbereich dem Fahrzeug übermittelbar sein. Bspw. kann der zweite Hinweisgeber ebenfalls als passives Verkehrszeichen ausgebildet sein. Durch den zweiten Hinweisgeber kann eine Genauigkeit des Ankoppelbeginns verbessert werden, indem der Ankoppelbeginn aktualisiert wird. Dabei können z. B. Änderungen in der Verkehrssituation, oder weiteren Umgebungsbedingungen in die Aktualisierung einfließen. Insbesondere kann der zweite Hinweisgeber durch das Fahrzeug genutzt werden, um den Ankoppelbeginn zu verifizieren und/oder zu optimieren. Weiterhin ist es denkbar, dass nach dem Erfassen des zweiten Hinweisgebers zum Hinweis auf den Ankoppelbereich ein dritter Hinweisgeber erfasst wird, anhand dessen eine dritte Fahrdistanz des Fahrzeuges zum Ankoppelbereich bestimmt wird. In Abhängigkeit von der dritten Fahrdistanz kann der Ankoppelbeginn erneut aktualisiert werden. Dadurch kann die erste Fahrdistanz in weitere Teilbereiche unterteilt werden, die dazu genutzt werden können, den Ankoppelbeginn in seiner Genauigkeit und/oder in Bezug auf geänderte Umgebungsbedingungen zu verbessern und/oder zu präzisieren.

Weiterhin ist es bei einem erfindungsgemäßen Koppelverfahren denkbar, dass das Ermitteln und/oder Aktualisieren des Ankoppelbeginns in Abhängigkeit von einer Fahrgeschwindigkeit des Fahrzeuges durchgeführt wird. Somit können insbesondere Geschwindigkeitsdaten des Fahrzeuges beim Ermitteln und/oder Aktualisieren des Ankoppelbeginns einfließen, um den Ankoppelbeginn zu präzisieren. Insbesondere kann in Abhängigkeit von der ersten Fahrdistanz und der Fahrgeschwindigkeit des Fahrzeuges ein Zeitpunkt ermittelt werden, ab welchem das Koppelelement aus der Ruheposition bewegt wird, um die Betriebsposition im Ankoppelbereich zu erreichen. Dabei kann insbesondere eine Geschwindigkeit des Koppelelements von der Ruheposition in die Betriebsposition berücksichtigt werden. Somit kann die Genauigkeit beim Erreichen des Ankoppelbereiches bzw. beim Koppeln des Fahrzeuges mit der Oberleitung weiter verbessert sein.

Weiterhin ist es bei einem erfindungsgemäßen Koppelverfahren denkbar, dass ein Endhinweisgeber zum Hinweis auf einen entlang der Fahrtrichtung nach dem Endhinweisgeber angeordneten Abkoppelbereich der Oberleitung erfasst wird und, vorzugsweise in Abhängigkeit von dem Abkoppelbereich, ein Abkoppelbeginn eines Abkoppelvorgangs, bei welchem das Koppelelement des Fahrzeuges von der Betriebsposition in die Ruheposition bewegt wird, ermittelt wird. Das Koppelverfahren kann dadurch über den gesamten Bereich der Kopplung optimiert sein. Durch den Endhinweisgeber kann insbesondere auf eine letzte Stütze der Oberleitung hingewiesen werden, sodass auch im Endbereich der Oberleitung das Koppelelement vorteilhaft von der Betriebsposition in die Ruheposition überführt werden. Dadurch kann auch im Endbereich der Oberleitung die Oberleitung möglichst lange ausgenutzt werden, um das Fahrzeug mit Strom zu versorgen. Dabei kann ebenfalls auf die Hinweissensorik zurückgegriffen werden, um den Endhinweisgeber zu erfassen und den Abkoppelbereich zu identifizieren. Vorzugsweise handelt es sich bei dem Endhinweisgeber um ein passives Verkehrszeichen.

Vorzugsweise kann bei einem erfindungsgemäßen Koppelverfahren vorgesehen sein, dass der Ankoppelvorgang ein Bewegen des Koppelelementes in eine Zwischenposition zwischen der Ruheposition und der Betriebsposition umfasst, wobei ein Bewegen des Koppelelementes von der Zwischenposition in die Betriebsposition beim Durchführen des Ankoppelvorgangs in Abhängigkeit von dem Erfassen des ersten Hinweisgebers oder eines weiteren Hinweisgebers erfolgt. Bei dem weiteren Hinweisgeber kann es sich z. B. um den zweiten oder dritten Hinweisgeber handeln. Dabei kann z. B. vorgesehen sein, dass überprüft wird, ob das Koppelelement von der Zwischenposition in die Betriebsposition überführt wird. Durch die Zwischenposition kann vorteilhafterweise bereits ein Teil des Ankoppelvorganges erfolgen, bevor der finale Zeitpunkt für die Betriebsposition feststeht. Dadurch kann eine Reaktionszeit, um das Koppelelement von der Zwischenposition in die Betriebsposition zu überführen, verkürzt werden. Dadurch kann der Ankoppelbeginn genauer bestimmt werden.

Vorzugsweise kann bei einem erfindungsgemäßen Koppelverfahren ferner vorgesehen sein, dass während dem Ankoppelvorgang ein Anfangshinweisgeber zum Hinweis auf einen Anfangsbereich der Oberleitung erfasst wird, wobei der Ankoppelvorgang in Abhängigkeit von dem Anfangshinweisgeber abgeschlossen wird. Bspw. ist es denkbar, dass der Anfangshinweisgeber dazu genutzt wird, das Koppelelement von der Zwischenposition in die Betriebsposition zu überführen. Weiterhin ist es denkbar, dass der Anfangshinweisgeber als letztes Verifikationsmittel für den Ankoppelvorgang vorgesehen ist. So ist es denkbar, dass das Fahrzeug bei einer fehlerhaften Erfassung des ersten, zweiten oder dritten Hinweisgebers auf den Anfangshinweisgeber zurückgreifen kann, um einen sicheren Ankoppelvorgang zu gewährleisten.

Weiterhin kann bei einem erfindungsgemäßen Koppelverfahren vorteilhafterweise vorgesehen sein, dass das Koppelverfahren folgenden Schritt umfasst:
- Ermitteln einer Relativposition des Fahrzeugs zur Oberleitung durch eine optische Erkennung der Oberleitung und/oder durch einen Abgleich von Geodaten,
wobei die Relativposition beim Ermitteln des Ankoppelbeginns berücksichtigt wird. Bei den Geodaten kann es sich um Satellitendaten, z. B. in Form von GPS- oder Galileo-Daten, handeln. Insbesondere können die Geodaten von einem Satellitensystem zur Verfügung gestellt werden, um die Relativposition des Fahrzeuges zu ermitteln. Die optische Erkennung der Oberleitung kann insbesondere ein Erkennen einer Stütze der Oberleitung oder einer elektrischen Leitung der Oberleitung umfassen. Durch die Geodaten und/oder die optische Erkennung der Oberleitung kann eine Genauigkeit beim Ankoppelbeginn verbessert werden. So ist es denkbar, dass die Relativposition des Fahrzeuges dazu genutzt wird, um die erste Fahrdistanz zu verifizieren und/oder zu plausibilisieren. Dadurch können Fehlerkennungen reduziert werden. Weiterhin ist durch die zusätzliche Ermittlung der Relativposition durch die optische Erkennung und/oder den Abgleich von Geodaten ein Ausweichsystem zur Verfügung gestellt, um eine Redundanz der Ermittlung des Ankoppelbeginns zu ermöglichen.

Gemäß einem weiteren Aspekt der Erfindung ist ein Computerprogrammprodukt vorgesehen. Das Computerprogrammprodukt umfasst Befehle, die bei der Ausführung durch eine Steuereinheit die Steuereinheit dazu veranlassen, ein erfindungsgemäßes Koppelverfahren auszuführen.

Somit bringt ein erfindungsgemäßes Computerprogrammprodukt die gleichen Vorteile mit sich, wie sie bereits ausführlich mit Bezug auf ein erfindungsgemäßes Koppelverfahren beschrieben worden sind. Das Computerprogrammprodukt kann in Form von Hardware und/oder Software in die Steuereinheit implementiert sein oder implementierbar sein. Insbesondere handelt es sich bei der Steuereinheit um eine Steuereinheit eines Fahrzeuges.

Gemäß einem weiteren Aspekt der Erfindung ist ein Fahrzeug zum Koppeln mit einer Oberleitung zur Stromversorgung des Fahrzeuges vorgesehen. Das Fahrzeug weist eine Steuereinheit zum Ausführen eines erfindungsgemäßen Koppelverfahrens auf.

Bei dem Fahrzeug kann es sich insbesondere um einen Lastkraftwagen handeln. Das Fahrzeug kann ein elektrisch angetriebenes Fahrzeug sein. Bspw. kann das Fahrzeug einen Elektromotor und/oder eine Batterie, insbesondere in Form einer Traktionsbatterie, aufweisen. Durch die Stromversorgung über die Oberleitung kann der Elektromotor und/oder die Fahrzeugbatterie mit Strom versorgt werden. Die Steuereinheit umfasst vorzugsweise eine Auswerteeinheit des Fahrzeuges und/oder eine Koppelsteuerung. Die Steuereinheit kann Teil eines zentralen Steuergerätes des Fahrzeuges sein. Weiterhin kann die Steuereinheit insbesondere mit einer Hinweissensorik in Kommunikationsverbindung stehen, um die erste Fahrdistanz in Abhängigkeit von dem ersten Hinweisgeber ermitteln zu können. Somit bringt ein erfindungsgemäßes Fahrzeug die gleichen Vorteile die gleichen Vorteile mit sich, wie sie bereits mit Bezug auf ein erfindungsgemäßes Koppelverfahren beschrieben worden sind. Insbesondere kann das Koppelverfahren vollständig fahrzeugseitig durchgeführt werden, wodurch das Fahrzeug zumindest teilweise autark von weiteren elektrischen Systemen außerhalb des Fahrzeuges sein kann. Insbesondere kann die Steuereinheit ein erfindungsgemäßes Computerprogrammprodukt umfassen und/oder ausführen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: ein erfindungsgemäßes Koppelverfahren in schematischer Darstellung von Verfahrensschritten in einem ersten Ausführungsbeispiel,
- Fig. 2: ein erfindungsgemäßes Fahrzeug auf einer Fahrstrecke beim Ausführen des Koppelverfahrens,
- Fig. 3: das Fahrzeug bei einem Ankoppelvorgang,
- Fig. 4: passive Verkehrszeichen zum Bestimmen einer ersten Fahrdistanz des Fahrzeuges entlang der Fahrstrecke.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

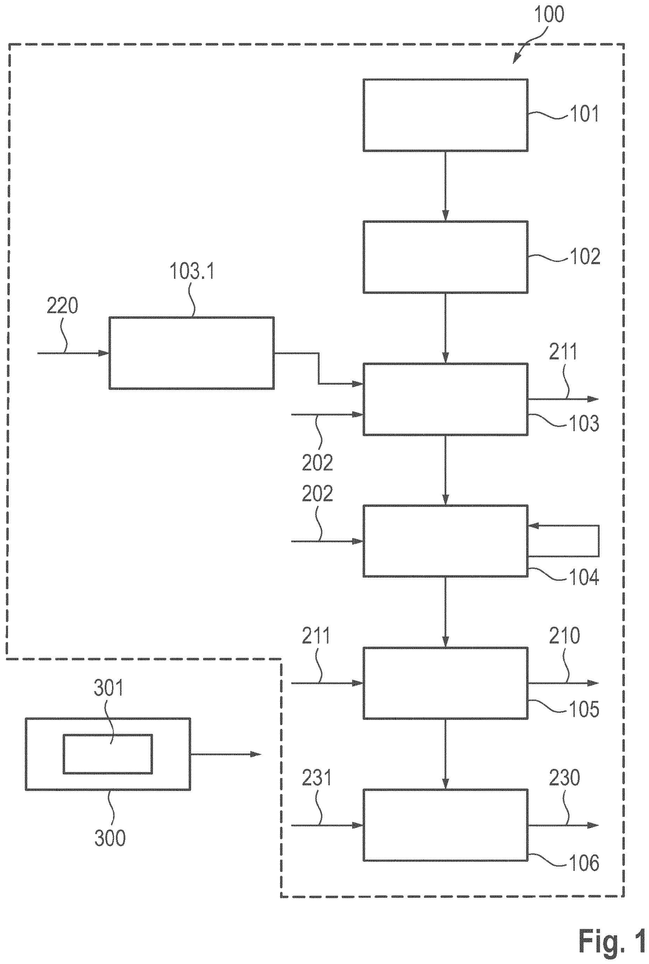

Fig. 1 zeigt ein erfindungsgemäßes Koppelverfahren 100 zum Koppeln eines Fahrzeuges 1 mit einer Oberleitung 20 zur Stromversorgung des Fahrzeuges 1 in schematischer Darstellung von Verfahrensschritten in einem ersten Ausführungsbeispiel. Dabei ist das Koppelverfahren 100 vorzugsweise mittels Befehlen 301 eines erfindungsgemäßen Computerprogrammproduktes 300 durch eine Steuereinheit 6 des Fahrzeuges 1 ausführbar.

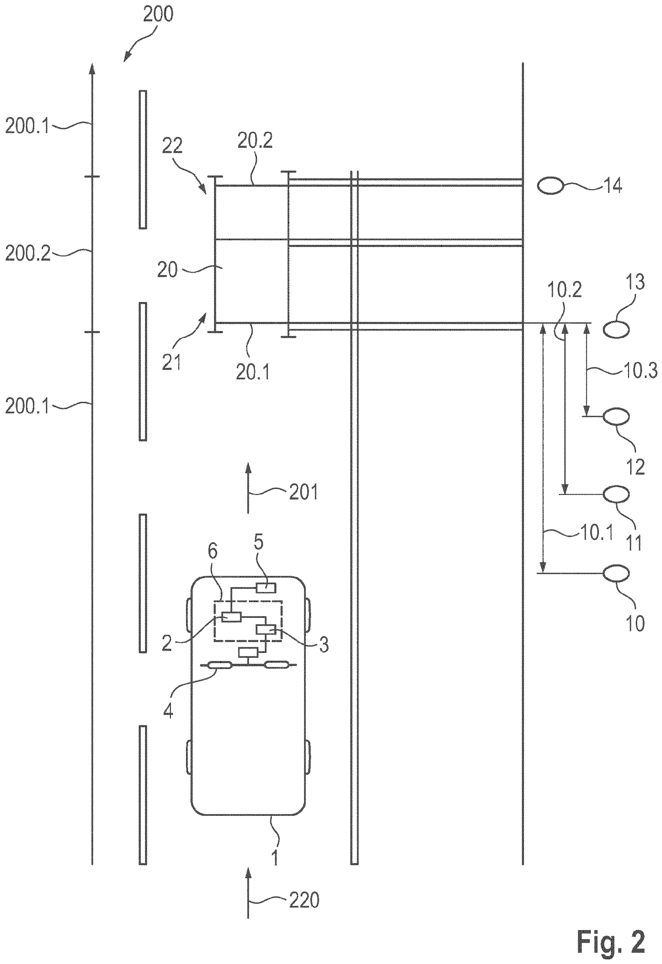

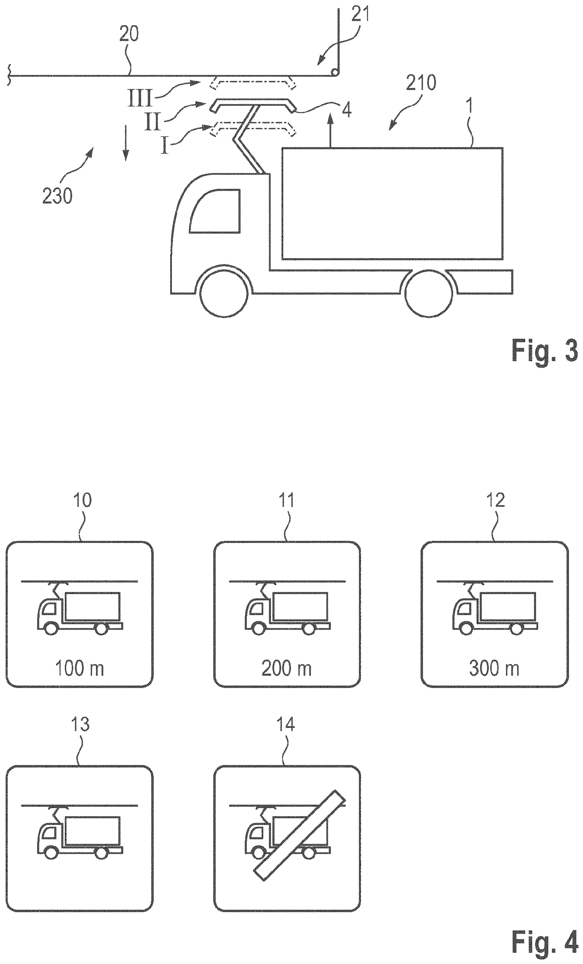

In Fig. 2 ist das Fahrzeug 1 dargestellt, während sich das Fahrzeug 1 entlang einer Fahrstrecke 200 in einer Fahrtrichtung 201 auf die Oberleitung 20 zubewegt. Dabei befindet sich das Fahrzeug 1 zunächst auf einem oberleitungslosen Streckenabschnitt 200.1 der Fahrstrecke 200. Bspw. kann es sich um einen Abschnitt einer Autobahn oder dergleichen handeln. Bei dem Fahrzeug 1 handelt es sich vorzugsweise um einen zumindest teilweise elektrisch betreibbaren Lkw. Um die Oberleitung 20 möglichst zu einem optimalen Zeitpunkt mit dem Fahrzeug 1 koppeln zu können, umfasst das Koppelverfahren 100 ein Erfassen 101 eines ersten Hinweisgebers 10 zum Hinweis auf einen entlang der Fahrtrichtung 201 nach dem ersten Hinweisgeber 10 angeordneten Ankoppelbereich 21 der Oberleitung 20. Der Ankoppelbereich 21 kann einen Beginn eines elektrifizierten Streckenabschnitts 200.2 der Fahrstrecke 200 umfassen. Im Ankoppelbereich 21 kann ein Beginn der Stromversorgung durch die Oberleitung 20 erfolgen. Bei dem ersten Hinweisgeber 10 handelt es sich insbesondere um ein passives Verkehrszeichen, wie in Fig. 4 dargestellt. Dabei kann das Fahrzeug 1 den ersten Hinweisgeber 10 insbesondere durch eine Hinweissensorik 5 des Fahrzeuges 1 optisch erfassen. Bspw. kann die Hinweissensorik 5 eine Kamera umfassen. In Abhängigkeit von dem ersten Hinweisgeber 10 erfolgt ein Bestimmen 102 einer ersten Fahrdistanz 10.1 des Fahrzeuges 1 zum Ankoppelbereich 21 der Oberleitung 20. Die erste Fahrdistanz 10.1 kann durch die Identifikation des ersten Hinweisgebers 10, insbesondere durch eine Identifikation einer Beschriftung des ersten Hinweisgebers 10, bestimmt werden. Die erste Fahrdistanz 10.1 kann eine Distanz des Fahrzeuges 1 zum Zeitpunkt des Erfassens 101 des ersten Hinweisgebers 10 zum Ankoppelbereich 21 umfassen oder eine Distanz, in welcher der erste Hinweisgeber 10 zum Ankoppelbereich 21 der Oberleitung 20 installiert ist. In Abhängigkeit von der ersten Fahrdistanz 10.1 erfolgt ein Ermitteln 103 eines Ankoppelbeginns 211 eines Ankoppelvorganges 210 zum elektrischen Ankoppeln des Fahrzeuges 1 an die Oberleitung 20.

Beim Ankoppelvorgang 210 bewegt sich das Fahrzeug 1 insbesondere in Richtung der Oberleitung 20 bzw. auf die Oberleitung 20 zu. Beim Ermitteln 103 des Ankoppelbeginns 211 wird insbesondere eine Fahrgeschwindigkeit 202 des Fahrzeuges 1 berücksichtigt. Weiterhin kann eine Dauer des Ankoppelvorganges 210 beim Ermitteln 103 des Ankoppelbeginns 211 berücksichtigt werden. Dadurch kann in Abhängigkeit von dynamischen Fahrbedingungen der Ankoppelbeginn 211 möglichst genau ermittelt werden. Vorzugsweise werden ferner beim Fahren entlang der Fahrstrecke 200 ein zweiter und ein dritter Hinweisgeber 11, 12 erfasst, anhand derer eine zweite Fahrdistanz 10.2 und eine dritte Fahrdistanz 10.3 bestimmt werden. Anhand der zweiten und dritten Fahrdistanz 10.2, 10.3 kann insbesondere jeweils ein Aktualisieren 104 des Ankoppelbeginns 211 in Abhängigkeit von der zweiten bzw. dritten Fahrdistanz 10.2, 10.3 erfolgen. Dadurch kann z. B. eine Änderung einer Geschwindigkeit des Fahrzeuges 1 und/oder eine Änderung bestimmter Umgebungsbedingungen, wie z. B. einer Verkehrssituation, berücksichtigt werden. Insbesondere handelt es sich bei dem zweiten und dritten Hinweisgeber 11, 12 ebenfalls um passive Verkehrszeichen. Auch beim Aktualisieren 104 des Ankoppelbeginns 211 kann die Fahrgeschwindigkeit 202 berücksichtigt werden. In Abhängigkeit von dem Ankoppelbeginn 211 erfolgt der Ankoppelvorgang 210. Weiterhin ist es denkbar, dass das Fahrzeug 1 Geodaten 220, insbesondere von einem Satellitensystem, erhält, um ein Ermitteln 103.1 einer Relativposition des Fahrzeuges 1 zur Oberleitung 20 durchzuführen. Zusätzlich oder alternativ kann eine optische Erkennung der Oberleitung 20 vorgesehen sein, um die Relativposition des Fahrzeuges 1 zu ermitteln. Die Relativposition kann beim Ermitteln 103 des Ankoppelbeginns 211 berücksichtigt werden. Ferner ist es denkbar, dass die Relativposition zum redundanten Ermitteln des Ankoppelbeginns 211 eingesetzt wird.

Der Ankoppelvorgang 210 ist schematisch in Fig. 3 dargestellt. Dabei wird ein Koppelelement 4 des Fahrzeuges 1 zum elektrischen Koppeln des Fahrzeuges 1 mit der Oberleitung 20 von einer Ruheposition I in eine Betriebsposition III bewegt. In der Betriebsposition III übt das Koppelelement 4 vorzugsweise einen Anpressdruck auf die Oberleitung 20 aus, um einen elektrischen Kontakt sicherzustellen. In der Ruheposition I ist das Koppelelement 4 insbesondere am Fahrzeug 1 angeordnet, vorzugsweise in einer Aufnahme des Fahrzeuges 1, um einen geringen Windwiderstand hervorzurufen. Es kann vorgesehen sein, dass der Ankoppelvorgang 210 ein Bewegen des Koppelelementes 4 in eine Zwischenposition II umfasst. Die Zwischenposition II kann zwischen der Betriebsposition III und der Ruheposition I vorgesehen sein, sodass ein Teil der Wegstrecke von der Ruheposition I in die Betriebsposition III in der Zwischenposition II bereits zurückgelegt ist. Somit kann eine kürzere Reaktionszeit zum Verstellen des Koppelelementes 4 in die Betriebsposition III ermöglicht werden, wenn das Koppelelement 4 in der Zwischenposition II bereits näher zur Oberleitung 20 ist.

Nach dem dritten Hinweisgeber 12 ist, insbesondere unmittelbar am Ankoppelbereich 21 der Oberleitung 20 randseitig der Fahrstrecke 200 ein Anfangshinweisgeber 13 zum Hinweis auf einen Anfangsbereich, insbesondere in Form einer ersten Stütze 20.1 und/oder Aufhängung, der Oberleitung 20 angeordnet. Der Anfangshinweisgeber 13 kann insbesondere als Verifikation für das Erreichen der Oberleitung 20 genutzt werden. In Abhängigkeit von dem Anfangshinweisgeber 13 kann z. B. vorgesehen sein, dass der Ankoppelvorgang 210 abgeschlossen wird, indem das Koppelelement 4 von der Zwischenposition II in die Betriebsposition III verstellt wird. Alternativ kann der Anfangshinweisgeber 13 dazu dienen, den Ankoppelbereich 21 dennoch zu erkennen, wenn z.B. der erste, zweite und dritte Hinweisgeber 10, 11, 12 nicht erfasst wurden,.

Weiterhin kann ein Durchführen 106 eines Abkoppelvorganges 230 in Abhängigkeit von einem Endhinweisgeber 14 vorgesehen sein. Der Endhinweisgeber 14 kann das Ende der Oberleitung 20, insbesondere in Form einer letzten Stütze 20.2 und/oder Aufhängung, und/oder einen Abkoppelbereich 22 der Oberleitung 20 markieren und ebenfalls als passives Verkehrszeichen ausgebildet sein. In Abhängigkeit von dem Endhinweisgeber 14 kann ein Abkoppelbeginn 231 des Abkoppelvorganges 230 bestimmt werden, um die Oberleitung 20 auch im Abkoppelbereich 22 möglichst lange auszunutzen.

Das Fahrzeug 1 weist insbesondere eine Steuereinheit 6 auf, die in Kommunikationsverbindung mit der Hinweissensorik 5 steht. Die Steuereinheit 6 kann eine Auswerteeinheit 2 und eine Koppelsteuerung 3 umfassen. Dabei ist es denkbar, dass die Auswerteeinheit 2 und/oder die Koppelsteuerung 3 Teil eines zentralen Steuergerätes des Fahrzeuges 1 sind. Dadurch kann das Koppelverfahren 100 im Wesentlichen autark durch das Fahrzeug 1 durchführbar sein.

**Bezugszeichenliste**

| | | | |
|---|---|---|---|
| 1 | Fahrzeug | 103.1 | Ermitteln einer Relativposition |
| 2 | Auswerteeinheit | 104 | Aktualisieren von 211 |
| 3 | Koppelsteuerung | 105 | Durchführen von 210 |
| 4 | Koppelelement | 106 | Durchführen von 230 |
| 5 | Hinweissensorik | | |
| 6 | Steuereinheit | 200 | Fahrstrecke |
| | | 200.1 | oberleitungsloser Streckenabschnitt |
| 10 | Hinweisgeber | 200.2 | elektrifizierter Streckenabschnitt |
| 10.1 | erste Fahrdistanz | 201 | Fahrtrichtung |
| 10.2 | zweite Fahrdistanz | 202 | Fahrgeschwindigkeit |
| 10.3 | dritte Fahrdistanz | | |
| 11 | Hinweisgeber | 210 | Ankoppelvorgang |
| 13 | Anfangshinweisgeber | 211 | Ankoppelbeginn |
| 14 | Endhinweisgeber | | |
| | | 220 | Geodaten |
| 20 | Oberleitung | | |
| 20.1 | erste Stütze von 20 | 230 | Abkoppelvorgang |
| 20.2 | letzte Stütze von 20 | 231 | Abkoppelbeginn |
| 21 | Ankoppelbereich | | |
| 22 | Abkoppelbereich | 300 | Computerprogrammprodukt |
| | | 301 | Befehle von 300 |
| 100 | Koppelverfahren | | |
| 101 | Erfassen von 10 | I | Ruheposition |
| 102 | Bestimmen von 10.1 | II | Zwischenposition |
| 103 | Ermitteln von 211 | III | Betriebsposition |

## Patentansprüche

1. Koppelverfahren (100) zum Koppeln eines Fahrzeugs (1) mit einer Oberleitung (20) zur Stromversorgung des Fahrzeuges (1) während sich das Fahrzeug (1) entlang einer Fahrstrecke (200) in einer Fahrtrichtung (201) bewegt,
umfassend die folgenden Schritte:
- Erfassen (101) eines ersten Hinweisgebers (10) zum Hinweis auf einen entlang der Fahrtrichtung (201) nach dem ersten Hinweisgeber (10) angeordneten Ankoppelbereich (21) der Oberleitung (20) für einen Beginn der Stromversorgung durch die Oberleitung (20),
- Bestimmen (102) einer ersten Fahrdistanz (10.1) des Fahrzeugs (1) zum Ankoppelbereich (21) in Abhängigkeit von dem ersten Hinweisgeber (10),
- Ermitteln (103) eines Ankoppelbeginns (211) eines Ankoppelvorgangs (210), bei welchem ein Koppelelement (4) des Fahrzeugs (1) in Abhängigkeit von der ersten Fahrdistanz (10.1) des Fahrzeuges (1) von einer Ruheposition (I) in eine Betriebsposition (III) zur Stromversorgung des Fahrzeuges (1) über die Oberleitung (20) bewegt wird,
- Durchführen (105) des Ankoppelvorgangs (210) in Abhängigkeit von dem ermittelten Ankoppelbeginn (211).

2. Koppelverfahren (100) nach Anspruch 1,
**dadurch gekennzeichnet,**
**dass** das Erfassen (101) des ersten Hinweisgebers (10) optisch durch eine Hinweissensorik (5) des Fahrzeuges (1) zum Erfassen (101) des ersten Hinweisgebers (10) erfolgt und/oder dass es sich bei dem ersten Hinweisgeber (10) um ein passives Verkehrszeichen handelt.

3. Koppelverfahren (100) nach Anspruch 1 oder 2,
**dadurch gekennzeichnet,**
**dass** das Bestimmen (102) der ersten Fahrdistanz (10.1) und das Ermitteln (103) des Ankoppelbeginns (211) durch eine Auswerteeinheit (2) des Fahrzeugs (1) durchgeführt wird, durch welche einer Koppelsteuerung (3) zum Durchführen (105) des Ankoppelvorgangs (210) der Ankoppelbeginn (211) übermittelt wird.

4. Koppelverfahren (100) nach einem der vorhergehenden Ansprüche,
**dadurch gekennzeichnet,**
**dass** nach dem Erfassen (101) des ersten Hinweisgebers (10) zumindest ein zweiter Hinweisgeber (11) zum Hinweis auf den Ankoppelbereich (21) erfasst wird, anhand dessen eine zweite Fahrdistanz (10.2) des Fahrzeuges (1) zum Ankoppelbereich (21) bestimmt wird, wobei der folgende Schritt durchgeführt wird:
- Aktualisieren (104) des Ankoppelbeginn (211) in Abhängigkeit von der zweiten Fahrdistanz (10.2).

5. Koppelverfahren (100) nach einem der vorhergehenden Ansprüche,
**dadurch gekennzeichnet,**
**dass** das Ermitteln (103) und/oder Aktualisieren (104) des Ankoppelbeginns (211) in Abhängigkeit von einer Fahrgeschwindigkeit (202) des Fahrzeuges (1) durchgeführt wird.

6. Koppelverfahren (100) nach einem der vorhergehenden Ansprüche,
**dadurch gekennzeichnet,**
**dass** ein Endhinweisgeber (14) zum Hinweis auf einen entlang der Fahrtrichtung (201) nach dem Endhinweisgeber (14) angeordneten Abkoppelbereich (22) der Oberleitung (20) erfasst wird und ein Abkoppelbeginn (231) eines Abkoppelvorgangs (230), bei welchem das Koppelelement (4) des Fahrzeuges (1) von der Betriebsposition (III) in die Ruheposition (I) bewegt wird, ermittelt (103) wird.

7. Koppelverfahren (100) nach einem der vorhergehenden Ansprüche,
**dadurch gekennzeichnet,**
**dass** der Ankoppelvorgang (210) ein Bewegen des Koppelelementes (4) in eine Zwischenposition (II) zwischen der Ruheposition (I) und der Betriebsposition (III) umfasst, wobei ein Bewegen des Koppelelementes (4) von der Zwischenposition (II) in die Betriebsposition (III) beim Durchführen (105) des Ankoppelvorgangs (210) in Abhängigkeit von dem Erfassen (101) des ersten Hinweisgebers (10) oder eines weiteren Hinweisgebers (11, 12, 13) erfolgt.

8. Koppelverfahren (100) nach einem der vorhergehenden Ansprüche,
**dadurch gekennzeichnet,**
**dass** das Koppelverfahren (100) folgenden Schritt umfasst:
- Ermitteln (103.1) einer Relativposition des Fahrzeugs (1) zur Oberleitung (20) durch eine optische Erkennung der Oberleitung (20) und/oder durch einen Abgleich von Geodaten (220),
wobei die Relativposition beim Ermitteln (103) des Ankoppelbeginns (211) berücksichtigt wird.

9. Computerprogrammprodukt (300), umfassend Befehle (301), die bei der Ausführung durch eine Steuereinheit (6) die Steuereinheit (6) dazu veranlassen, ein Koppelverfahren (100) nach einem der vorhergehenden Ansprüche auszuführen.

10. Fahrzeug (1) zum Koppeln mit einer Oberleitung (20) zur Stromversorgung des Fahrzeuges (1) aufweisend
eine Steuereinheit (6) zum Ausführen eines Koppelverfahrens (100) nach einem der vorhergehenden Ansprüche.
